(19) Europäisches Patentamt / European Patent Office / Office européen des brevets

(11) **EP 3 243 092 B1**

(12) # EUROPEAN PATENT SPECIFICATION

(45) Date of publication and mention of the grant of the patent:
**02.08.2023 Bulletin 2023/31**

(21) Application number: **15877263.2**

(22) Date of filing: **10.01.2015**

(51) International Patent Classification (IPC):
**G02B 6/124** (2006.01)    **G02B 6/34** (2006.01)
**F21V 8/00** (2006.01)    **G06F 3/042** (2006.01)

(52) Cooperative Patent Classification (CPC):
**G02B 6/0016; G02B 6/0036; G02B 6/34;**
**G02B 30/33;** G02B 5/1861; G02B 27/425;
H04N 13/305

(86) International application number:
**PCT/US2015/010933**

(87) International publication number:
**WO 2016/111707 (14.07.2016 Gazette 2016/28)**

(54) **GRATING COUPLED LIGHT GUIDE**

GITTERGEKOPPELTER LICHTLEITER

GUIDE DE LUMIÈRE COUPLÉ À UN RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.11.2017 Bulletin 2017/46**

(73) Proprietor: **LEIA Inc.**
**Menlo Park, CA 94025 (US)**

(72) Inventor: **FATTAL, David, A.**
**Menlo Park, CA 94025 (US)**

(74) Representative: **Carpmaels & Ransford LLP**
**One Southampton Row**
**London WC1B 5HA (GB)**

(56) References cited:
EP-A1- 2 938 919       EP-B1- 2 938 919
US-A- 3 885 856        US-A- 5 729 311

US-A1- 2002 076 129    US-A1- 2005 123 229
US-A1- 2011 002 143    US-A1- 2011 002 143
US-A1- 2013 201 723    US-B1- 8 681 423

- JIE CUI ET AL: "P-170: Optical Touch Screen based on Grating and Waveguide", S I D INTERNATIONAL SYMPOSIUM. DIGEST OF TECHNICAL PAPERS, vol. 45, no. 1, 1 June 2014 (2014-06-01), pages 1614-1617, XP055498105, US ISSN: 0097-966X, DOI: 10.1002/j.2168-0159.2014.tb00431.x
- WALDHAEUSL R ET AL: "EFFICIENT COUPLING INTO POLYMER WAVEGUIDES BY GRATINGS", APPLIED OPTICS, OPTICAL SOCIETY OF AMERICA, WASHINGTON, DC; US, vol. 36, no. 36, 20 December 1997 (1997-12-20), pages 9383-9390, XP000737205, ISSN: 0003-6935, DOI: 10.1364/AO.36.009383
- David Fattal ET AL: "A multi-directional backlight for a wide-angle, glasses-free three-dimensional display", Nature, vol. 495, no. 7441, 20 March 2013 (2013-03-20), pages 348-351, XP055303470, London ISSN: 0028-0836, DOI: 10.1038/nature11972

**Description**

CROSS-REFERENCE TO RELATED APPLICATIONS

N/A

STATEMENT REGARDING FEDERALLY SPONSORED RESEARCH OR DEVELOPMENT

N/A

BACKGROUND

US 2002/0076129 A1 describes a position measuring system that includes a graduation support having a measuring graduation, a planar waveguide and a light source that generates light that is conducted to the measuring graduation. US 3,885,856 A describes a coupling device for an optical waveguide, using a hologram recorded in a photoresist layer arranged on a face of the waveguide. David Fattal et al ("A multi-directional backlight for a wide-angle, glasses-free three-dimensional display", Nature, vol. 495, no. 7441, 20 March 2013, pages 348-351) describes multi-directional backlight for a wide-angle, glasses-free three-dimensional display which features directional pixels in the form of binary diffraction gratings.

Plate light guides, also referred to as slab optical waveguides, are used in a variety of optical and photonic applications. For example, a plate light guide may be employed in a backlight of an electronic display. In particular, the plate light guide may be used to distribute light to pixels of the electronic display. The pixels may be multiview pixels of a three-dimensional display, for example. In another example, the plate light guide may be employed as a touch-sensitive panel. Frustrated total internal reflection associated with touching a surface of the plate light guide may be used to detect where and with how much pressure the plate light guide is touched, for example.

In various optical and photonic applications of a plate light guide, light from a light source must be introduced or coupled into the plate light guide to propagate as guided light. Further, in many applications, light introduction or coupling is configured to provide guided light within plate light guide having certain predetermined propagation characteristics. For example, the guided light produced by the light coupling may propagate with a particular or predetermined propagation angle and in a particular or predetermined propagation direction. Further, the guided light or a beam thereof may have a predetermined spread angle(s). For example, the guided light may be a substantially collimated beam of light propagating from an input edge to an output edge of the plate light guide. In addition, the beam of guided light may travel within the plate light guide at a predetermined propagation angle relative to a plane of the plate light guide such that the light beam effectively 'bounces' between a front surface and back surface of the plate light guide.

Among the various light couplers for introducing or coupling light from a light source into a plate light guide are lenses, baffles, mirrors and various related reflectors (e.g., parabolic reflectors, shaped reflectors, etc.) as well as combinations thereof. Unfortunately using such light couplers often requires often exacting manufacturing operations to produce and precisely realize the light coupler such that the desired propagation characteristics of the guided light are obtained. Further, the light coupler manufacturing is often separate from the production of the plate light guide. As a further complication, these separately manufactured light couplers typically must be precisely aligned with and then affixed to the plate light guide to provide the desired light coupling that results in added cost and manufacturing complexity.

SUMMARY OF THE INVENTION

The present invention is defined by appended independent claims 1 and 14. Certain embodiments of the invention are set out in the dependent claims.

BRIEF DESCRIPTION OF THE DRAWINGS

Various features of examples and embodiments in accordance with the principles described herein may be more readily understood with reference to the following detailed description taken in conjunction with the accompanying drawings, where like reference numerals designate like structural elements, and in which:

Figure 1A illustrates a cross sectional view of a grating-coupled light guide, according to an example consistent with the principles described herein.
Figure 1B illustrates a cross sectional view of a grating-coupled light guide, according to another example consistent with the principles described herein.
Figure 2A illustrates a top view of a grating coupler, according to an example consistent with the principles described herein.

Figure 2B illustrates a top view of a grating coupler, according to another example consistent with the principles described herein.

Figure 3A illustrates a cross sectional view of a portion of a grating-coupled light guide, according to an example consistent with the principles described herein.

Figure 3B illustrates a cross sectional view of a portion of a grating-coupled light guide, according to another example consistent with the principles described herein.

Figure 4A illustrates a cross sectional view of a portion of a grating-coupled light guide, according to another example consistent with the principles described herein.

Figure 4B illustrates a cross sectional view of a portion of a grating-coupled light guide, according to yet another example consistent with the principles described herein.

Figure 5 illustrates a block diagram of a grating-coupled light guide system, according to an example consistent with the principles described herein.

Figure 6 illustrates a perspective view of a grating-coupled light guide system, according to an example consistent with the principles described herein.

Figure 7 illustrates a perspective view of a grating-coupled light guide system, according to another example consistent with the principles described herein.

Figure 8 illustrates a cross sectional view of a multibeam diffraction grating of the grating coupled light guide system, according to an example consistent with the principles described herein.

Figure 9 illustrates a block diagram of a 3-D electronic display, according to an example consistent with the principles described herein.

Figure 10 illustrates a flow chart of a method of coupling light into a plate light guide, according to an example consistent with the principles described herein.

Certain examples and embodiments have other features that are one of in addition to and in lieu of the features illustrated in the above-referenced figures. These and other features are detailed below with reference to the above-referenced figures.

DETAILED DESCRIPTION

Examples in accordance with the principles described herein provide diffractive coupling of light into a plate light guide. In particular, light is coupled into the plate light guide using a grating coupler that includes a diffraction grating. Further, the grating coupler is configured to couple light from a light source that may be substantially uncollimated and configured to produce guided light within the plate light guide having predetermined propagation characteristics, according to various examples. The guided light has a predetermined propagation angle within the plate light guide while light from the light source may have an incident angle on the grating coupler of about ninety degrees and a relatively broad beam or large cone angle. The guided light is a beam of light within the plate light guide having a predetermined spread angle. For example, both of a horizontal spread angle (e.g., parallel to a surface of the plate light guide) of the guided light beam and a vertical spread angle (e.g., orthogonal to the plate light guide surface) of the guided light beam may be about zero such that the beam of light is a collimated light beam. In another example, the grating coupler may be configured to produce a guided light beam having one or both of the horizontal spread angle and the vertical spread angle corresponding to a fan-shaped beam pattern (e.g., a beam having about a thirty degree spread angle to more than about a ninety degree spread angle). The light coupling into a plate light guide employing a grating coupler (e.g., a grating-coupled light guide), according to examples of the principles described herein, is used in a backlight of an electronic display (e.g., a multibeam grating-based backlight) and may be used in a touch-sensitive panel.

Moreover, the grating coupler may be manufactured as part of the plate light guide, according to various examples, obviating a need for separate, potentially costly manufacture and assembly of other types of light coupling structures (e.g., lenses, mirrors, parabolic reflectors, etc.) to couple light into the plate light guide.

Herein, a 'light guide' is defined as a structure that guides light within the structure using total internal reflection. In particular, the light guide may include a core that is substantially transparent at an operational wavelength of the light guide. In various examples, the term 'light guide' generally refers to a dielectric optical waveguide that employs total internal reflection to guide light at an interface between a dielectric material of the light guide and a material or medium that surrounds that the light guide. By definition, a condition for total internal reflection is that a refractive index of the light guide is greater than a refractive index of a surrounding medium adjacent to a surface of the light guide material. In some examples, the light guide may include a coating in addition to or instead of the aforementioned refractive index difference to further facilitate the total internal reflection. The coating may be a reflective coating, for example. According to various examples, the light guide may be any of several light guides including, but not limited to, one or both of a plate or slab guide and a strip guide.

Further herein, the term 'plate' when applied to a light guide as in a 'plate light guide' is defined as a piece-wise or differentially planar layer or sheet. In particular, a plate light guide is defined as a light guide configured to guide light in two substantially orthogonal directions bounded by a top surface and a bottom surface (i.e., opposite surfaces) of the light guide. Further, by definition herein, the top and bottom surfaces are both separated from one another and may be substantially parallel to one another in at least a differential sense. That is, within any differentially small region of the plate light guide, the top and bottom surfaces are substantially parallel or co-planar. In some examples, a plate light guide may be substantially flat (e.g., confined to a plane) and so the plate light guide is a planar light guide. In other examples, the plate light guide may be curved in one or two orthogonal dimensions. For example, the plate light guide may be curved in a single dimension to form a cylindrical shaped plate light guide. In various examples however, any curvature has a radius of curvature sufficiently large to insure that total internal reflection is maintained within the plate light guide to guide light.

According to various examples, a grating coupler is used to couple light into the plate light guide. The grating coupler, by definition herein, includes a diffraction grating in which characteristics and the features thereof (i.e., 'diffractive features') are used to control one or both of an angular directionality and an angular spread of a light beam produced by the diffraction grating from incident light. The characteristics that may be used to control the angular directionality and the angular spread include, but are not limited to, one or more of a grating length, a grating pitch (feature spacing), a shape of the diffractive features (e.g., sinusoidal, rectangular, triangular, sawtooth, etc.), a size of the diffractive features (e.g., groove or ridge width), and an orientation of the grating. In some examples, the various characteristics used for control may be characteristics that are local to a vicinity of a point of origin of the produced light beam as well as a point or points of incidence of the light on the diffraction grating.

Herein, a 'diffraction grating' is generally defined as a plurality of features (i.e., the diffractive features) arranged to provide diffraction of light incident on the diffraction grating. In some examples, the plurality of features may be arranged in a periodic or quasi-periodic manner. For example, the diffraction grating may include a plurality of features (e.g., a plurality of grooves in a material surface) arranged in a one-dimensional (1-D) array. In other examples, the diffraction grating may be a two-dimensional (2-D) array of features. For example, the diffraction grating may be a 2-D array of bumps on a material surface.

As such, and by definition herein, the diffraction grating is a structure that provides diffraction of light incident on the diffraction grating. When used in conjunction with a plate light guide, the diffraction grating may couple the incident light into or out of the plate light guide. As such, the coupling by the diffraction grating may be referred to as, 'diffractive coupling' in that diffraction provides the light coupling. The diffraction grating may also redirect or change an angle of the light by diffraction (i.e., a diffraction angle). In particular, as a result of diffraction, light leaving the diffraction grating (i.e., diffracted light) generally has a different propagation direction than a propagation direction of the incident light. The change in the propagation direction of the light by diffraction is referred to as 'diffractive redirection' herein. Hence, the diffraction grating may be understood to be a structure including diffractive features that diffractively redirects light incident on the diffraction grating and further that may diffractively couple light into or out of the plate light guide.

Further by definition herein, the features of a diffraction grating are referred to as 'diffractive features' and may be one or more of at, in and on a surface (e.g., a boundary between two materials). The surface may be a surface of a plate light guide, for example. The diffractive features may include any of a variety of structures that diffract light including, but not limited to, one or more of grooves, ridges, holes and bumps at, in or on the surface. For example, the diffraction grating may include a plurality of parallel grooves in a material surface. In another example, the diffraction grating may include a plurality of parallel ridges rising out of the material surface. The diffractive features (e.g., grooves, ridges, holes, bumps, etc.) may have any of a variety of cross sectional shapes or profiles that provide diffraction including, but not limited to, one or more of a rectangular profile, a triangular profile and a saw tooth profile (e.g., a blazed grating).

In some examples, a multibeam diffraction grating is employed to couple light out of the plate light guide, e.g., as pixels of an electronic display. In particular, the plate light guide may be part of a backlight of, or used in conjunction with, an electronic display such as, but not limited to, a 'glasses free' three-dimensional (3-D) electronic display (e.g., also referred to as a 'holographic' electronic display).

By definition herein, a 'multibeam diffraction grating' is a diffraction grating that produces coupled-out light that includes a plurality of light beams. Further, the light beams of the plurality produced by the multibeam diffraction grating have different principal angular directions from one another, by definition herein. In particular, by definition, a light beam of the plurality has a predetermined principal angular direction that is different from another light beam of the light beam plurality as a result of diffractive coupling and diffractive redirection of incident light by the multibeam diffraction grating. For example, the light beam plurality may include eight light beams that have eight different principal angular directions. The eight light beams in combination (i.e., the light beam plurality) may represent a light field, for example. According to various examples, the different principal angular directions of the various light beams are determined by a combination of a grating pitch or spacing and an orientation or rotation of the diffractive features of the multibeam diffraction grating at the points of origin of the respective light beams relative to a propagation direction of the light incident on the multibeam diffraction grating.

According to various examples described herein, a multibeam diffraction grating is employed to couple light out of the plate light guide, e.g., as pixels of an electronic display. In particular, the plate light guide having a multibeam diffraction grating to produce light beams of the plurality having different angular directions may be part of a backlight of or used in conjunction with an electronic display such as, but not limited to, a 'glasses free' three-dimensional (3-D) electronic display (e.g., also referred to as a multiview or 'holographic' electronic display or an autostereoscopic display). As such, the differently directed light beams produced by coupling out guided light from the light guide using the multibeam diffractive gratings may be or represent 'pixels' of the 3-D electronic display.

Herein, a 'light source' is defined as a source of light (e.g., an apparatus or device that produces and emits light). For example, the light source may be a light emitting diode (LED) that emits light when activated. Herein, a light source may be substantially any source of light or optical emitter including, but not limited to, one or more of a light emitting diode (LED), a laser, an organic light emitting diode (OLED), a polymer light emitting diode, a plasma-based optical emitter, a fluorescent lamp, an incandescent lamp, and virtually any other source of light. The light produced by a light source may have a color or may include a particular wavelength of light.

Further, as used herein, the article 'a' is intended to have its ordinary meaning in the patent arts, namely 'one or more'. For example, 'a grating' means one or more gratings and as such, 'the grating' means 'the grating(s)' herein. Also, any reference herein to 'top', 'bottom', 'upper', 'lower', 'up', 'down', 'front', back', 'first', 'second', 'left' or 'right' is not intended to be a limitation herein. Herein, the term 'about' when applied to a value generally means within the tolerance range of the equipment used to produce the value, or in some examples, means plus or minus 10%, or plus or minus 5%, or plus or minus 1%, unless otherwise expressly specified. Further, the term 'substantially' as used herein means a majority, or almost all, or all, or an amount within a range of about 51% to about 100%, for example. Moreover, examples herein are intended to be illustrative only and are presented for discussion purposes and not by way of limitation.

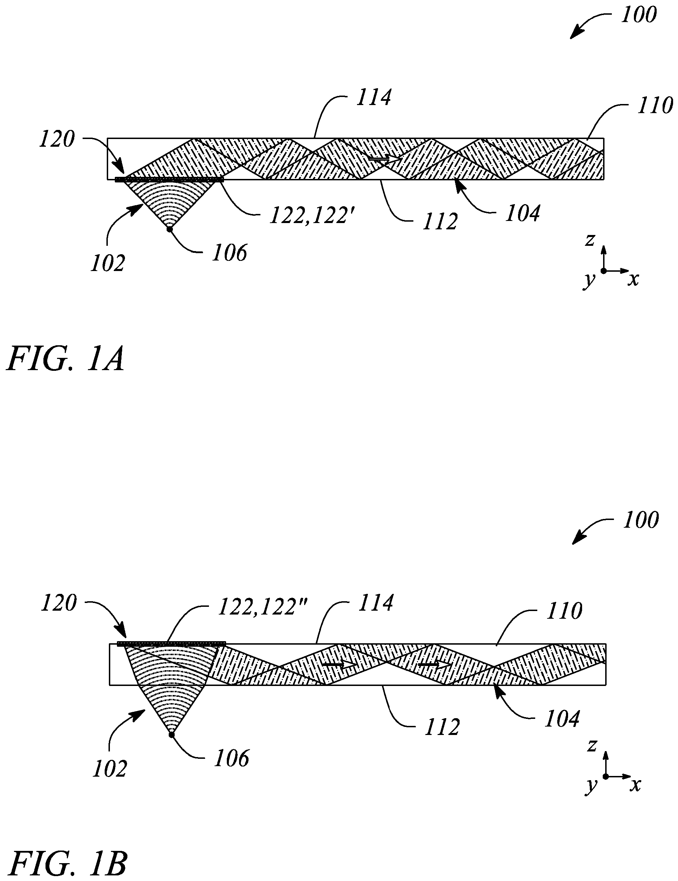

In accordance with some examples of the principles described herein, a grating-coupled light guide is provided. Figure 1A illustrates a cross sectional view of a grating-coupled light guide 100, according to an example consistent with the principles described herein. Figure 1B illustrates a cross sectional view of a grating-coupled light guide 100, according to another example consistent with the principles described herein. The grating-coupled light guide 100 is configured to couple light 102 into the grating-coupled light guide 100 as guided light 104. The light 102 may be provided by a light source 106 (e.g. a substantially uncollimated light source 106), for example. According to various examples, the grating-coupled light guide 100 may provide a relatively high coupling efficiency. Moreover, the grating-coupled light guide 100 transforms the light 102 into guided light 104 (e.g., a beam of guided light) having a predetermined spread angle within the grating-coupled light guide 100, according to various examples.

In particular, coupling efficiency of greater than about twenty percent (20%) may be achieved, according to some examples. For example, in a transmission configuration (described below), the coupling efficiency of the grating-coupled light guide 100 may be greater than about thirty percent (30%) or even greater than about thirty-five percent (35%). A coupling efficiency of up to about forty percent (40%) may be achieved, for example. In a reflection configuration, the coupling efficiency of the grating-coupled light guide 100 may be as high as about fifty percent (50%), or about sixty percent (60%) or even about seventy percent (70%), for example.

According to various examples, the predetermined spread angle provided by and within the grating-coupled light guide 100 may provide a beam of guided light 104 having controlled or predetermined propagation characteristics. In particular, the grating-coupled light guide 100 may provide a controlled or predetermined first spread angle in a 'vertical' direction, i.e., in a plane perpendicular to a plane of a surface of the grating-coupled light guide 100. Simultaneously, the grating-coupled light guide 100 may provide a controlled or predetermined second spread angle in a horizontal direction, i.e., in a plane parallel to the grating-coupled light guide surface. Further, the light 102 may be received from the light source 106 at an angle that is substantially perpendicular to the grating-coupled light guide plane and then transformed into the beam of guided light 104 having a non-zero propagation angle within the grating-coupled light guide 100, e.g., a non-zero propagation angle consistent with a critical angle of total internal reflection within the grating-coupled light guide 100.

As illustrated, the grating-coupled light guide 100 includes a light guide 110. In particular, the light guide 110 is a plate light guide 110, according to various examples. The plate light guide 110 is configured to guide light (e.g., from the light source 106) along a length or extent of the plate light guide 110. Further, the plate light guide 110 is configured to guide light (i.e., guided light 104) at the non-zero propagation angle, according to various examples. As defined herein, the non-zero propagation angle is an angle relative to a surface (e.g., a top surface or a bottom surface) of the plate light guide 110.

According to some examples, the non-zero propagation angle may be between about ten (10) degrees and about sixty (60) degrees. In some examples, the non-zero propagation angle may be between about twenty (20) degrees and about forty (40) degrees, or between about twenty-five (25) degrees and about thirty-five (35) degrees. For example, the non-zero propagation angle may be about thirty (30) degrees. In other examples, the non-zero propagation angle may be about 20 degrees, or about 25 degrees, or about twenty-eight (28) degrees, or about 35 degrees. The non-zero propagation angle may be substantially constant throughout a length of the plate light guide 110, according to various examples.

In particular, the plate light guide 110 may be configured to guide the guided light 104 using total internal reflection, according to some examples. For example, the plate light guide 110 may include a dielectric material configured as an optical waveguide. The dielectric material may have a refractive index that is greater than a refractive index of a medium surrounding the dielectric optical waveguide. The difference between refractive indices of the dielectric material and the surrounding medium facilitates total internal reflection of the guided light 104 within the plate light guide 110 according to one or more guided modes thereof. The non-zero propagation angle may correspond to an angle that is less than a critical angle for total internal reflection, according to various examples.

In some examples, the plate light guide 110 may be a slab or plate optical waveguide comprising an extended, substantially planar sheet of optically transparent material (e.g., as illustrated in cross section in Figures 1A and 1B). The substantially planar sheet of dielectric material is configured to guide the guided light 104 using total internal reflection. The optically transparent material of the plate light guide 110 may include or be made up of any of a variety of dielectric materials including, but not limited to, one or more of various types of glass (e.g., silica glass, alkali-aluminosilicate glass, borosilicate glass, etc.) and substantially optically transparent plastics or polymers (e.g., poly(methyl methacrylate) or 'acrylic glass', polycarbonate, etc.). In some examples, the plate light guide 110 may further include a cladding layer on at least a portion of a surface (e.g., the top surface and/or the bottom surface) of the plate light guide 110 (not illustrated). The cladding layer may be used to further facilitate total internal reflection, according to some examples.

Once introduced into the plate light guide 110, the guided light 104 propagates along the plate light guide 110 in a direction that is generally away from an input end thereof. As illustrated in Figures 1A and 1B, the guided light 104 propagates along the plate light guide 110 in a generally horizontal direction. Propagation of the guided light 104 is illustrated from left to right in Figures 1A and 1B as a hollow horizontal arrow pointing along a horizontal axis (e.g., x-axis) and representing a propagating optical beam within the plate light guide 110. The propagating optical beam may represent one or more of the optical modes of the plate light guide 110, for example. The propagating optical beam of the guided light 104 propagates by 'bouncing' or reflecting off of walls (e.g., top or front and bottom or back surfaces) of the light guide 110 at an interface between the material (e.g., dielectric) of the light guide 110 and the surrounding medium due to total internal reflection, according to various examples. An angle to reflection in figures 1A and 1B corresponds to the non-zero propagation angle of the guided light 104.

According to various examples, the grating-coupled light guide 100 further includes a grating coupler 120. The grating coupler 120 is located at an input to (e.g., adjacent to an input edge of) the plate light guide 110. The grating coupler 120 is configured to couple light from the light source 106 into the plate light guide 110 using diffraction. In particular, the grating coupler 120 is configured to receive light 102 (e.g., from the light source 106) and to diffractively redirect (i.e., diffractively couple) the light 102 into the plate light guide 110 at the non-zero propagation angle as the guided light 104. As mentioned above, the guided light 104 that is diffractively directed or coupled into the plate light guide 110 by the grating coupler 120 has controlled or predetermined propagation characteristics, according to various examples.

In particular, characteristics of the grating coupler 120 are configured to determine the propagation characteristics of the guided light 104 or a light beam thereof. The propagation characteristics determined by the grating coupler 120 includes the non-zero propagation angle, a first spread angle, and a second spread angle of the guided light 104. The 'first spread angle,' by definition herein, is a predetermined spread angle of the guided light 104 in a plane that is substantially perpendicular to a surface of the plate light guide 110. Further, the first spread angle represents an angle of beam spread as the light beam of the guided light 104 propagates in a direction defined by the non-zero propagation angle (e.g., beam spread in a vertical plane), by definition herein. The 'second spread angle' is an angle in plane that is substantially parallel to the light guide surface, by definition herein. The second spread angle represents a predetermined spread angle of the guided light beam as the guided light 104 propagates in a direction (i.e., in a plane) that is substantially parallel to the plate light guide surface (e.g., in a horizontal plane).

According to various examples, the grating coupler 120 includes a diffraction grating 122 having a plurality of spaced-apart diffractive features. The first spread angle and the non-zero propagation angle of the guided light 104 may be controlled or determined by a pitch and, to some extent, a lateral shape of the diffractive features of the diffraction grating 122, according to some examples. That is, by selecting a pitch of the grating in a direction corresponding to the general propagation direction of the guided light 104, a diffraction angle of the diffraction grating 122 may be used to produce the non-zero propagation angle. In addition, by varying the pitch and other aspects of the diffractive features along a length and across a width the diffraction grating 122 of the grating coupler 120, the first angular spread of the guided light 104 may be controlled, i.e., to provide the predetermined first angular spread, according to some examples.

Further, according to some examples, the predetermined second spread angle of the guided light 104 may be controlled by a lateral shape or width variation of the diffraction grating 122 of the grating coupler 120. For example, a diffraction grating 122 that increases in width from a first end toward a second end of the diffraction grating 122 (i.e., a fan-shaped grating) may produce a relatively large second spread angle of the redirected, guided light 104 (i.e., a fan-shaped optical beam). In particular, according to some examples, the predetermined second spread angle may be substantially proportional to an angle of the increase in a width of the diffraction grating 122 of the grating coupler 120. In another example, a diffraction grating 122 that has relatively little variation in width (e.g., with substantially parallel sides) may provide a relatively small second spread angle of the light beam of guided light 104. A relatively small second spread angle (e.g., a spread angle that is substantially zero) may provide a guided light beam that is collimated or at least substantially collimated in a horizontal direction parallel or coplanar with the plate light guide surface, for example.

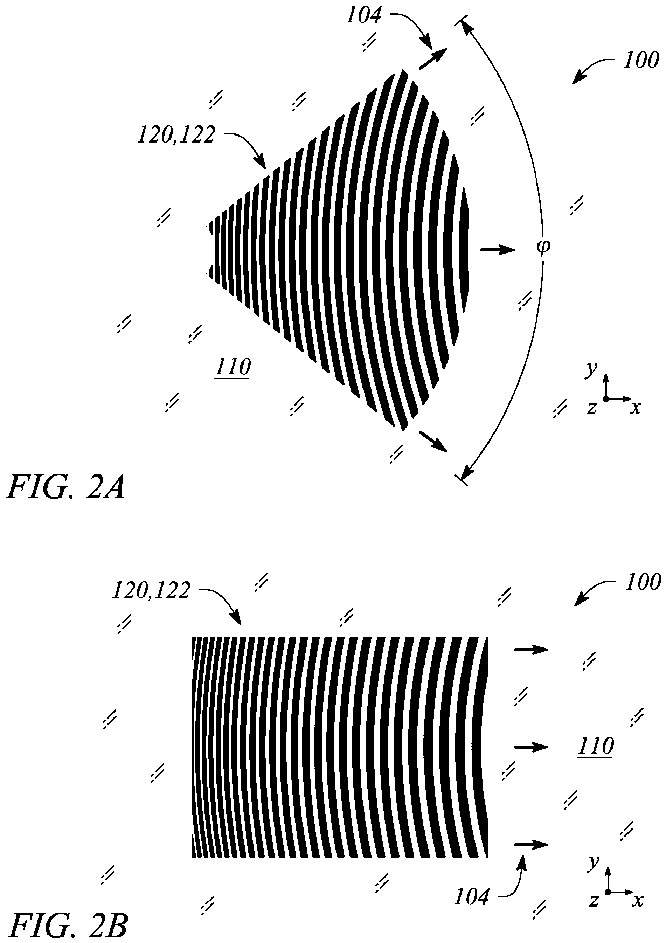

Figure 2A illustrates a plan view of a grating coupler 120, according to an example consistent with the principles described herein. Figure 2B illustrates a plan view of a grating coupler 120, according to another example consistent with the principles described herein. In particular, Figure 2A illustrates a grating coupler 120 having a diffraction grating 122 that is fan-shaped, as viewed from a surface (e.g., a top surface or a bottom surface) of the plate light guide 110. The fan-shaped diffraction grating 122 has a width that increases from a first end toward a second end of the diffraction grating 122, where the width increase defines a fan angle $\varphi$. As illustrated, the diffraction grating fan angle $\varphi$ is about eighty (80) degrees. The fan-shaped diffraction grating 122 may provide a fan-shaped optical beam of guided light 104 (e.g., illustrated using heavy arrows) having a predetermined second spread angle that is proportional to the fan angle $\varphi$ according to various examples.

Figure 2B, on the other hand, illustrates a grating coupler 120 having a rectangular-shaped diffraction grating 122 (e.g., having a fan angle $\varphi$ equal to about zero), as viewed from the plate light guide surface. The rectangular-shaped diffraction grating 122 may produce a substantially collimated optical beam of guided light 104, i.e., an optical beam of guided light 104 having a predetermined second spread angle that is about zero. The substantially collimated optical beam of guided light 104 is illustrated using parallel heavy arrows in Figure 2B. As such, the fan angle $\varphi$ of the diffraction grating 122 may be used to control or determine the second spread angle of the guided light 104, according to various examples.

Referring again to Figures 1A-1B, according to some examples, the grating coupler 120 may be a transmissive grating coupler 120 (i.e., a transmission mode diffraction grating coupler), while in other examples, the grating coupler 120 may be a reflective grating coupler 120 (i.e., a reflection mode diffraction grating coupler). In particular, as illustrated in Figure 1A, the grating coupler 120 may include a transmission mode diffraction grating 122' at a surface 112 of the plate light guide 110 adjacent to the light source 106. For example, the transmission mode diffraction grating 122' of the grating coupler 120 may be on a bottom (or first) surface 112 of the plate light guide 110 and the light source 106 may illuminate the grating coupler 120 from the bottom. As illustrated in Figure 1A, the transmission mode diffraction grating 122' of the grating coupler 120 is configured to diffractively redirect light 102 that is transmitted or passes through diffraction grating 122.

Alternatively, as illustrated in Figure 1B, the grating coupler 120 may be a reflective grating coupler 120 having a reflection mode diffraction grating 122" at a surface 114 of the plate light guide 110 that is opposite to the surface adjacent to the light source 106. For example, the reflection mode diffraction grating 122" of the grating coupler 120 may be on a top (or second) surface 114 of the plate light guide 110 and the light source 106 may illuminate the grating coupler 120 through a portion of the bottom (or first) surface 112 of the plate light guide 110. The reflection mode diffraction grating 122" is configured to diffractively redirect light 102 into the plate light guide 110 using reflective diffraction (i.e., reflection and diffraction), as illustrated in Figure 1B.

According to various examples, diffractive grating 122 of the grating coupler 120 may include grooves, ridges or similar diffractive features of a diffraction grating formed or otherwise provided on or in the surface 112, 114 of the plate light guide 110. For example, grooves or ridges may be formed in or on the light source-adjacent surface 112 (e.g., bottom or first surface) of the plate light guide 110 to serve as the transmission mode diffraction grating 122' of the transmissive grating coupler 120. Similarly, grooves or ridges may be formed or otherwise provided in or on the surface 114 of the plate light guide 110 opposite to the light source-adjacent surface 112 to serve as the reflection mode diffraction grating 122" of the reflective grating coupler 120, for example.

According to some examples, the grating coupler 120 may include a grating material (e.g., a layer of grating material) on or in the plate light guide surface. In some examples, the grating material may be substantially similar to a material of the plate light guide 110, while in other examples, the grating material may differ (e.g., have a different refractive index) from the plate light guide material. In some examples, the diffractive grating grooves in the plate light guide surface may be filled with the grating material. For example, grooves of the diffraction grating 122 of either the transmissive grating coupler 120 or the reflective grating coupler 120 may be filled with a dielectric material (i.e., the grating material) that differs from a material of the plate light guide 110. The grating material of the grating coupler 120 may include silicon nitride, for example, while the plate light guide 110 may be glass, according to some examples. Other grating materials including, but not limited to, indium tin oxide (ITO) may also be used.

In other examples, either the transmissive grating coupler 120 or the reflective grating coupler 120 may include ridges, bumps, or similar diffractive features that are deposited, formed or otherwise provided on the respective surface of the plate light guide 110 to serve as the particular diffraction grating 122. The ridges or similar diffractive features may be formed (e.g., by etching, molding, etc.) in a dielectric material layer (i.e., the grating material) that is deposited on the respective surface of the plate light guide 110, for example. In some examples, the grating material of the reflective grating coupler 120 may include a reflective metal. For example, the reflective grating coupler 120 may be or include a layer of reflective metal such as, but not limited to, gold, silver, aluminum, copper and tin, to facilitate reflection by the reflection mode diffraction grating 122".

According to various examples, the grating coupler 120 (i.e., either the transmissive grating coupler or the reflective grating coupler) is configured to produce a grating special phase function that is a difference between an output phase profile of the guided light 104 and an input phase profile of the light 102 incident from the light source 106. For example, if the light source 106 approximates a point source at a distance $f$ from the transmissive grating coupler 120, the input phase profile $\phi_{in}$ of the light may be given by equation (1) as

$$\phi_{in}\left(x,y\right) = \frac{2\pi}{\lambda} \cdot \sqrt{f^2 + x^2 + y^2} \qquad (1)$$

where $x$ and $y$ are spatial coordinates of the transmissive grating coupler 120 and $\lambda$ is wavelength in free space (i.e., a vacuum). The transmissive grating coupler 120 may be configured to produce a beam of guided light 104 that propagates away from an arbitrary center point $(x_0, y_0)$ of the grating coupler 120 at an angle $\theta$. As such, an output phase profile $\phi_{out}$ of the guided light 104 produced by the transmissive grating coupler 120 may be given by equation (2) as

$$\phi_{out}\left(x,y\right) = \frac{2\pi}{\lambda} \cdot n \cos\left(\theta\right) \cdot \sqrt{\left(x - x_0\right)^2 + \left(y - y_0\right)^2} \qquad (2)$$

where n is an index of refraction of the plate light guide 110. The grating spatial phase function of the transmissive grating coupler 120 may be determined from a difference between equation (1) and equation (2). In addition, a horizontal spread angle (e.g., in an x-y plane) may be determined by an envelope function of the diffraction grating of the transmissive grating coupler 120, according to various examples. When considering a reflective grating coupler 120, propagation of the light source light 102 through both the light source-adjacent surface (e.g., bottom surface) of the plate light guide 110 (i.e., refraction) and through a material of the plate light guide 110 also is taken into account. Further, with a reflective grating coupler 120, optional metallization (e.g., use of metal or a metal layer) may improve grating efficiency (e.g., by effectively eliminating a zero-th order transmitted diffraction order of a diffraction grating of the reflection grating coupler 120).

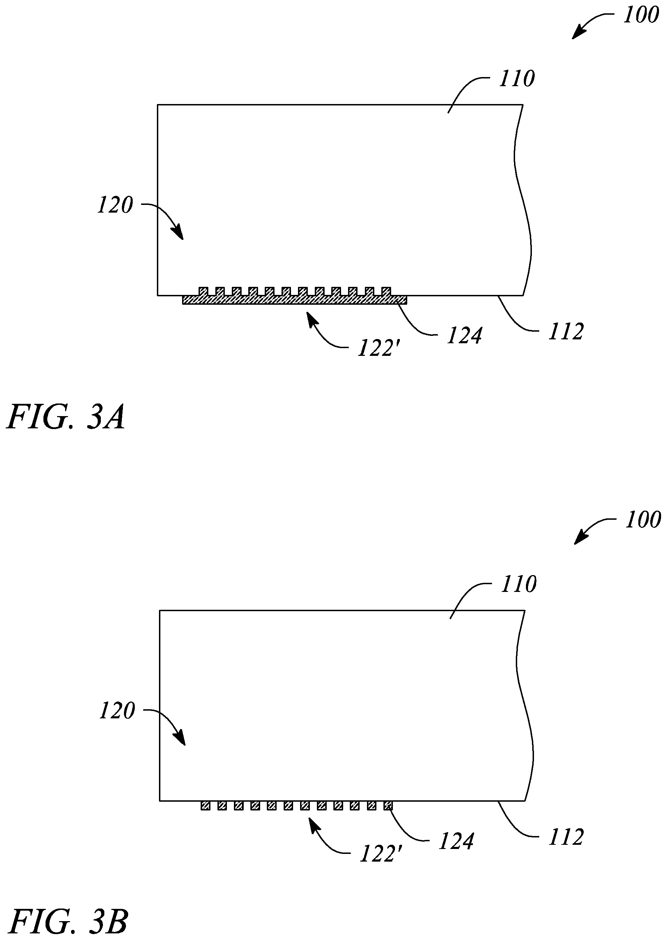

Figure 3A illustrates a cross sectional view of a portion of the grating-coupled light guide 100, according to an example consistent with the principles described herein. Figure 3B illustrates a cross sectional view of a portion of the grating-coupled light guide 100, according to another example consistent with the principles described herein. In particular, both Figures 3A and 3B illustrate a portion of the grating-coupled light guide 100 of Figure 1A that includes the grating coupler 120. Further, the grating coupler 120 illustrated in Figures 3A-3B is a transmissive grating coupler 120 that includes a transmission mode diffraction grating 122'.

As illustrated in Figure 3A, the transmissive grating coupler 120 includes grooves (i.e., diffractive features) formed in a bottom (or light source-adjacent) surface 112 of the plate light guide 110 to form the transmission mode diffraction grating 122'. Further, the transmission mode diffraction grating 122' of the transmissive grating coupler 120 illustrated in Figure 3A includes a layer of grating material 124 (e.g., silicon nitride) that is also deposited in the grooves. Figure 3B illustrates a transmissive grating coupler 120 that includes ridges (i.e., diffractive features) of the grating material 124 on the bottom or light source-adjacent surface 112 of the plate light guide 110 to form the transmission mode diffraction grating 122'. Etching or molding a deposited layer of the grating material 124, for example, may produce the ridges. In some examples, the grating material 124 that makes up the ridges illustrated in Figure 3B may include a material that is substantially similar to a material of the plate light guide 110. In other examples, the grating material 124 may differ from the material of the plate light guide 110. For example, the plate light guide 110 may include a glass or a plastic/polymer sheet and the grating material 124 may be a different material such as, but not limited to, silicon nitride, that is deposited on the plate light guide 110.

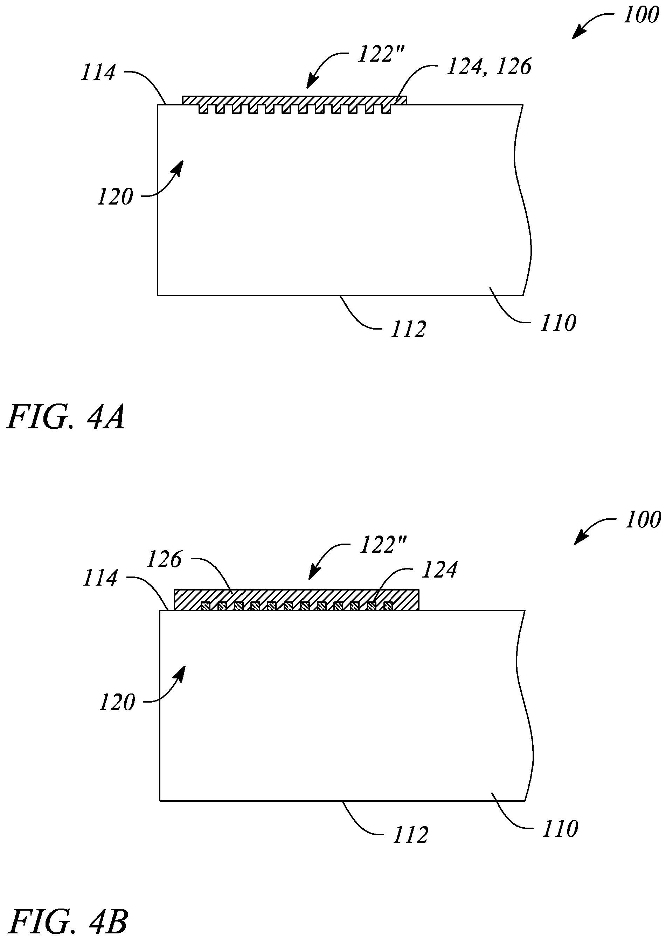

Figure 4A illustrates a cross sectional view of a portion of the grating-coupled light guide 100, according to another example consistent with the principles described herein. Figure 4B illustrates a cross sectional view of a portion of the grating-coupled light guide 100, according to yet another example consistent with the principles described herein. In particular, both Figures 4A and 4B illustrate a portion of the grating-coupled light guide 100 of Figure 1B that includes the grating coupler 120, where the grating coupler 120 is a reflective grating coupler 120 having a reflection mode diffraction grating 122". As illustrated, the reflective grating coupler 120 (i.e., a reflection mode diffraction grating coupler) is at or on a surface 114 of the plate light guide 110 opposite the surface 112 that is adjacent to the light source, e.g., light source 106 illustrated in Figure 1B, (i.e., a light source-opposite surface 114).

In Figure 4A, the reflection mode diffraction grating 122" of the reflective grating coupler 120 includes grooves (diffractive features) formed in the light source-opposite surface 114 or 'top surface' of the plate light guide 110 to reflectively diffract and redirect incident light 102 from the light source 106 through the plate light guide 110. As illustrated, the grooves are filled with and further backed by a layer 126 of a metal material to provide additional reflection and improve a diffractive efficiency of the illustrated reflective grating coupler 120. In other words, the grating material 124 includes the metal layer 126, as illustrated. In other examples (not illustrated), the grooves may be filled with a grating material (e.g., silicon nitride) and then backed or substantially covered by the metal layer, for example.

Figure 4B illustrates a reflective grating coupler 120 that includes ridges (diffractive features) formed of the grating material 124 on the top surface 114 of the plate light guide 110 to create the reflection mode diffraction grating 122". The ridges may be etched from a layer of silicon nitride (i.e., the grating material), for example. In some examples, a metal layer 126 is provided to substantially cover the ridges of the reflection mode diffraction grating 122" to provide increased reflection and improve the diffractive efficiency, for example.

In some examples, the grating-coupled light guide 100 may further include the light source 106 (e.g., illustrated in Figures 1A and 1B). As mentioned above, in some examples, the light source 106 may be an uncollimated light source 106. For example, the light source 106 may be a surface emitting LED chip mounted on a circuit board and configured to illuminate a space adjacent to (e.g., above) the LED chip on the circuit board. In some examples, the light source 106 may approximate a point source. In particular, the light source 106 may have or exhibit illumination characterized by a broad cone angle. For example, a cone angle of the light source 106 may be greater than about ninety (90) degrees. In other examples, the cone angle may be greater than about eighty (80) degrees, or greater than about seventy (70) degrees, or greater than about sixty (60) degrees. For example, the cone angle may be about forty-five (45) degrees. According to various examples, a central ray of the light 102 from the light source 106 may be configured to be incident on the grating coupler 120 at an angle that is substantially orthogonal to a surface of the plate light guide 110. For example, as illustrated in Figures 1A and 1B, the light source 106 may be below a bottom surface of the plate light guide 110 and configured to produce light 102 directed toward the plate light guide 110, e.g., in an upward direction, as illustrated.

In some examples, substantially uncollimated light 102 produced by the uncollimated light source 106 is substantially collimated by the diffractive redirection provided by the grating coupler 120 as collimated guided light 104. In other examples, the diffractively redirected guided light 104 is substantially uncollimated (e.g., when a fan-shaped beam is produced). In yet other examples, the guided light 104 may be substantially collimated by the grating coupler 120 in first direction (e.g., corresponding to a first spread angle about the non-zero propagation angle) and substantially uncollimated by the grating coupler 120 in a second direction (e.g., corresponding to the second spread angle). For example, the grating coupler 120 may provide a fan-shaped beam in a horizontal direction parallel to the plate light guide surfaces and a substantially collimated beam (i.e., a spread angle equal to about zero) in a vertical direction or plane perpendicular to the plate light guide surfaces.

In some examples of the principles described herein, a grating-coupled light guide system is provided. The grating-coupled light guide system has a variety of uses. For example, the grating-coupled light guide system may be used in a multibeam grating-based backlight. The multibeam grating-based backlight may be employed in a three-dimensional (3-D) electronic display, for example. In another example, a portion of the grating-coupled light guide system, such as a plate light guide of the grating-coupled light guide system, may be employed in a touch-sensitive panel to sense one or both of a location at which the touch panel is touched and a pressure at which the touch is applied using frustrated total internal reflection (FTIR).

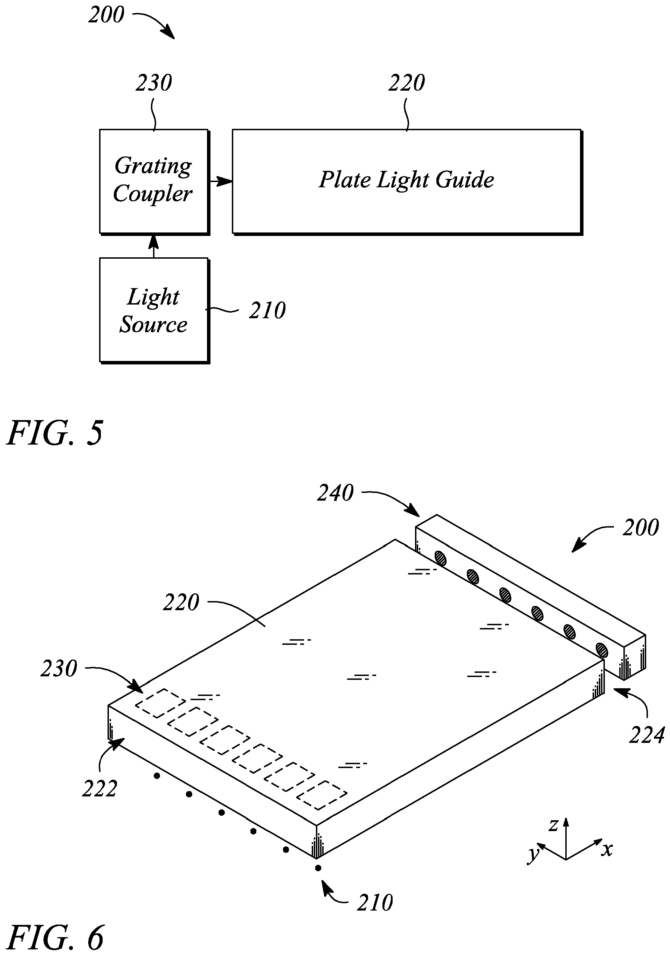

Figure 5 illustrates a block diagram of a grating-coupled light guide system 200, according to an example consistent with the principles described herein. The grating-coupled light guide system 200 includes a light source 210 to provide uncollimated light. The uncollimated light is provided in a first direction (e.g., a vertical direction), according to various examples. The light source 210 may be substantially similar to the light source 106 described above with respect to the grating-coupled light guide 100. For example, the light source 210 may approximate a point source (e.g., a point source of light).

The grating-coupled light guide system 200 further includes a plate light guide 220. The plate light guide 220 is configured to guide light at a non-zero propagation angle in a second direction. According to various examples, the second direction is substantially orthogonal to the first direction. In some examples, the plate light guide 220 is substantially similar to the plate light guide 110 of the grating-coupled light guide 100, described above. The plate light guide 220 may have a plurality of edges, for example.

The grating-coupled light guide system 200 illustrated in Figure 5 further includes a grating coupler 230. The grating coupler 230 may be located adjacent to or at an edge (e.g., an input edge) of the plate light guide 220, for example. The grating coupler 230 is configured to receive the uncollimated light from the light source 210 and to diffractively redirect the received light into the plate light guide 220 at the non-zero propagation angle and in the second direction as guided light. Further, the guided light diffractively redirected by the grating coupler 230 has a spread angle that is predetermined. For example, the diffractively redirected guided light may have one or both of a first spread angle and a second spread angle that are predetermined. The first spread angle may be in a plane perpendicular to a surface of the plate light guide 220 and the second spread angle may be in a plane that is substantially parallel to the plate light guide surface, for example.

According to various examples, a characteristic of the grating coupler 230 is configured to determine the non-zero propagation angle and the spread angle of the guided light. For example, characteristics of the grating coupler 230 including, but not limited to, a grating pitch and a shape of the grating may determine the non-zero propagation angle, the first spread angle (e.g., in a vertical plane) and the second spread angle (e.g., in a horizontal plane). According to some examples, the grating coupler 230 is substantially similar to the grating coupler 120 described above with respect to the grating-coupled light guide 100. Further, a diffraction grating of the grating coupler 230 may be substantially similar to the diffraction grating 122 of the grating-coupled light guide 100, described above.

In particular, in some examples, the grating coupler 230 includes a transmission mode diffraction grating and functions as a transmissive grating coupler 230. The transmission mode diffraction grating may be located on a bottom surface of the plate light guide 220 adjacent to the light source 210. In other examples, the grating coupler 230 includes a reflection mode diffraction grating and functions as a reflection grating coupler 230. The reflection mode diffraction grating may be located on a top surface of the plate light guide 220 opposite to the light source-adjacent bottom surface. In some examples, the grating coupler 230 may include both a transmission mode diffraction grating and a reflection mode diffraction grating.

In some examples, the grating-coupled light guide system 200 illustrated in Figure 5 further includes a plurality of light sensors at another edge of the plate light guide 220 to detect the guided light. The light sensors may be at an edge (e.g., output edge) opposite the edge (input edge) at which the grating coupler 230 is located, for example. In some examples, the light sensors may be located at any of the plurality of edges of the plate light guide 220. For example, the grating coupler 230 may be located at the input edge or a rectangular plate light guide 220, while the light sensors may be located at three other edges thereof. The plurality of light sensors is configured to determine a location at which a surface of the plate light guide is touched using frustrated total internal reflection (FTIR) of the guided light. Determining the touch location may also employ transmission tomographic reconstruction or triangulation in conjunction with guided light received by the light sensors. According to various examples, the grating-coupled light guide system 200 that includes the light sensors is a touch-sensitive panel system.

Figure 6 illustrates a perspective view of a grating-coupled light guide system 200, according to an example consistent with the principles described herein. As illustrated, the grating-coupled light guide system 200 is configured as a touch-sensitive panel system. In particular, Figure 6 illustrates a plurality of light sources 210 (e.g., as dots or point light sources) under a first edge 222 of a plate light guide 220. A plurality of grating couplers 230 are also illustrated at the plate light guide first edge 222, while a plurality of light sensors 240 are illustrated at a second edge 224 of the plate light guide 220. Note, in this example, the second edge 224 is opposite the first edge 222. The plurality of light sources 210 is configured to illuminate the plurality of grating couplers 230. The grating couplers 230 diffractively redirect light from the plurality of light sources 210 into a guided mode of the plate light guide 220 as guided light. The guided light is received and processed by the plurality of light sensors 240 at the second edge 224. A disturbance in the guided light (e.g., due to FTIR) caused by touching a surface of the plate light guide 220 may be detected by the plurality of light sensors 240 to determine a location, and in some examples, a pressure, of the surface touch.

The grating-coupled light guide system 200 illustrated in Figure 5 further includes an array of multibeam diffraction gratings at a surface of the plate light guide 220. The array of multibeam diffraction gratings may be included instead of or in addition to the plurality of light sensors, according to various examples. According to various examples, each multibeam diffraction grating of the array is configured to couple out a portion of the guided light as a plurality of light beams, using diffractive coupling. A principal angular direction of a light beam of the light beam plurality is different from principal angular directions of other light beams of the light beam plurality. According to various examples, the grating-coupled light guide system 200 including the array of multibeam diffraction gratings is a multibeam grating-based backlight.

In particular, the grating-coupled light guide system 200 configured as the multibeam grating-based backlight provides or generates a plurality of light beams directed out and away from a surface of the plate light guide 220. The light beams are directed out and away in different predetermined directions. In some examples, the plurality of light beams having different directions form a plurality of pixels of an electronic display. In some examples, the electronic display is a so-called 'glasses free' three-dimensional (3-D) electronic display (e.g., a multiview display). Further, in some examples, the light beams may be individually modulated (e.g., by a light valve as described below). The individual modulation of the light beams directed in different directions away from the grating-coupled light guide system 200 by the array of multibeam diffraction gratings may be particularly useful for 3-D electronic display applications, for example.

According to various examples, a multibeam diffraction grating of the array includes a plurality of diffractive features configured to provide diffraction. The provided diffraction is responsible for the diffractive coupling of the guided light out of the plate light guide 220. For example, the multibeam diffraction grating may include one or both of grooves in a surface of the plate light guide 220 and ridges protruding from the plate light guide surface that serve as the diffractive features. The grooves and ridges may be arranged parallel to one another and, at least at some point, perpendicular to a propagation direction of the guided light that is to be coupled out by the multibeam diffraction grating. In some examples, the grooves and ridges may be etched, milled or molded into the surface or applied on the surface. As such, a material of the multibeam diffraction grating may include a material of the plate light guide 220. In other examples (not illustrated), the multibeam diffraction grating may be a film or layer applied or affixed to the light guide surface. The diffraction grating may be deposited on the light guide surface, for example.

The multibeam diffraction gratings of the array may be arranged in a variety of configurations at, on or in the surface of the plate light guide 220, according to various examples. For example, the multibeam diffraction gratings of the array may be arranged in columns and rows across the plate light guide surface. The rows and columns of multibeam diffraction gratings may represent a rectangular array of multibeam diffraction gratings, for example. In another example, the array of multibeam diffraction gratings may be arranged as another array including, but not limited to, a circular array. In yet another example, the array of multibeam diffraction gratings may be distributed substantially randomly across the surface of the plate light guide 220.

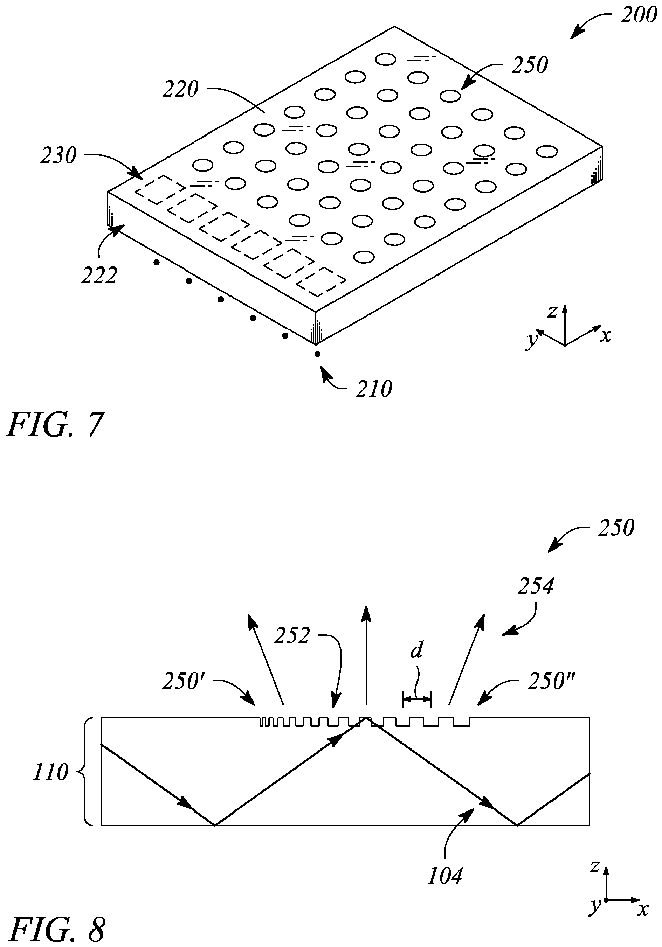

According to some examples, the array of multibeam diffraction gratings may include a chirped diffraction grating (e.g., as illustrated in Figure 8, described below). By definition, the 'chirped' diffraction grating is a diffraction grating exhibiting or having a diffraction pitch or spacing of the diffractive features that varies across an extent or length of the chirped diffraction grating. Herein, the varying diffraction spacing is referred to as a 'chirp'. As a result, the guided light that is diffractively coupled out of the plate light guide 220 exits or is emitted from the chirped diffraction grating as the light beam at different diffraction angles corresponding to different points of origin across the chirped diffraction grating. By virtue of the chirp, the chirped diffraction grating may produce the plurality of light beams having different principal angular directions. In some examples, the chirped diffraction grating may have or exhibit a chirp of the diffractive spacing that varies linearly with distance. As such, the chirped diffraction grating may be referred to as a 'linearly chirped' diffraction grating.

In another example, the chirped diffraction grating may exhibit a non-linear chirp of the diffractive spacing. Various non-linear chirps that may be used to realize the chirped diffraction grating include, but are not limited to, an exponential chirp, a logarithmic chirp or a chirp that varies in another, substantially non-uniform or random but still monotonic manner. Non-monotonic chirps such as, but not limited to, a sinusoidal chirp or a triangle (or sawtooth) chirp, may also be employed. Combinations of any of these types of chirps may also be employed.

According to some examples, the diffractive features within the multibeam diffraction grating of the array may have varying orientations relative to an incident direction of the guided light. In particular, an orientation of the diffractive features at a first point or location within the multibeam diffraction grating may differ from an orientation of the diffractive features at another point. In some examples, the multibeam diffraction grating may include diffractive features that are either curved or arranged in a generally curved configuration. In some examples, the curve of the diffractive feature(s) (e.g., groove, ridge, etc.) may represent a section of a circle. The circle may be coplanar with the plate light guide surface. In other examples, the curve may represent a section of an ellipse or another curved shape, e.g., that is coplanar with the light guide surface. In other examples, the multibeam diffraction grating of the array may include diffractive features that are 'piece-wise' curved. In particular, while the diffractive feature may not describe a substantially smooth or continuous curve *per se,* at different points along the diffractive feature within the multibeam diffraction grating, the diffractive feature still may be oriented at different angles with respect to the incident direction of the guided light to approximate a curve.

Figure 7 illustrates a perspective view of a grating-coupled light guide system 200, according to another example consistent with the principles described herein. As illustrated, the grating-coupled light guide system 200 is configured as a multibeam grating-based backlight. In particular, Figure 7 illustrates a plurality of light sources 210 (e.g., illustrated as a row of dots, by way of example) under a first edge 222 of a plate light guide 220. The light sources 210 are configured to illuminate the bottom surface of the plate light guide 220 with light directed in a z-direction, as illustrated. A plurality of grating couplers 230 are also illustrated (as dashed-line rectangles, by way of example) at the plate light guide first edge 222, and an array of multibeam diffraction gratings 250 are illustrated (as an array of circles, by way of example) arranged on a top surface (i.e., an x-*y* plane) of the plate light guide 220. The plurality of light sources 210 is configured to illuminate the plurality of grating couplers 230. The grating couplers 230 diffractively redirect light from the plurality of light sources 210 into a guided mode of the plate light guide 220 as guided light. The guided light is then diffractively coupled out by the multibeam diffraction gratings 250 of the array to produce a plurality of light beams (not illustrated in Figure 7) having different principal angular directions, according to various examples. Note that each multibeam diffraction grating 250 of the array produces a different plurality of light beams, according to various examples.

Figure 8 illustrates a cross sectional view of a multibeam diffraction grating 250 of the grating coupled light guide system 200, according to an example consistent with the principles described herein. In particular, the multibeam diffraction grating 250 is illustrated in a top surface of the plate light guide 220. The multibeam diffraction grating 250 includes a plurality of groove 252 in the surface of the plate light guide 220, although ridges or other diffractive features may be used instead of or in addition to the grooves 252, as illustrated. Further, as illustrated, the multibeam diffraction grating 250 is a chirped diffraction grating with a groove spacing d that increases from a first end 250' to a second end 250" of the multibeam diffraction grating 250. Light beams 254 having different principal angular directions produced by diffractively coupling out a portion of the guided light 104 are illustrated as arrows in Figure 8.

According to some examples of the principles described herein, an electronic display is provided. The electronic display is configured to emit modulated light beams as pixels of the electronic display. Further, in various examples, the modulated light beams may be preferentially directed toward a viewing direction of the electronic display as a plurality of differently directed, modulated light beams. In some examples, the electronic display is a three-dimensional (3-D) electronic display (e.g., a glasses-free, 3-D electronic display). Different ones of the modulated, differently directed light beams may correspond to different 'views' associated with the 3-D color electronic display, according to various examples. The different 'views' may provide a 'glasses free' (e.g., autostereoscopic) representation of information being displayed by the 3-D electronic display, for example.

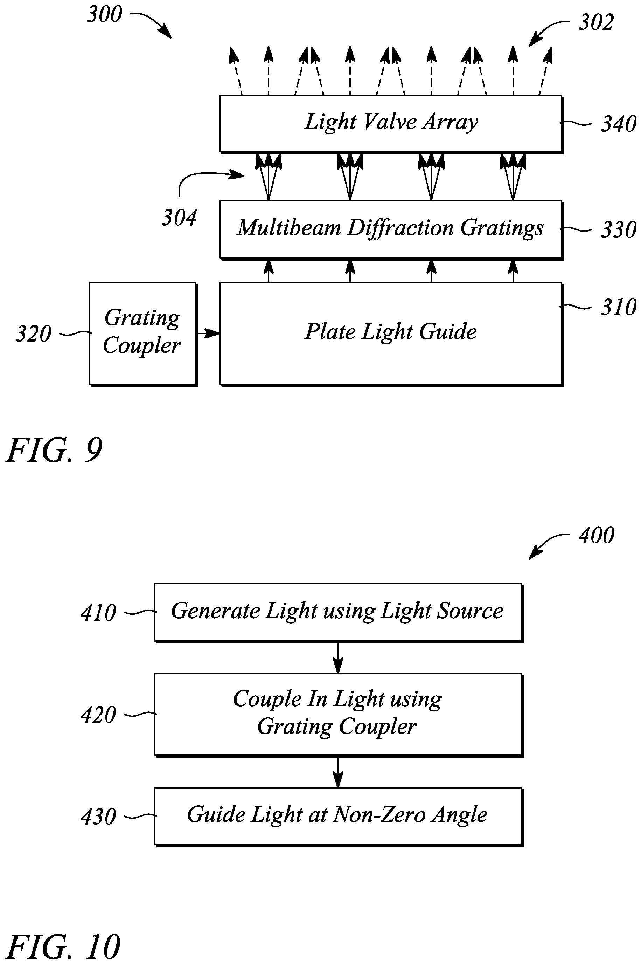

Figure 9 illustrates a block diagram of a 3-D electronic display 300, according to an example consistent with the principles described herein. The 3-D electronic display 300 illustrated in Figure 9 includes a plate light guide 310 to guide light. The guided light in the plate light guide 310 is a source of the light that becomes the modulated light beams 302 emitted by the 3-D electronic display 300. According to some examples, the plate light guide 310 may be substantially similar to the light guide 110 described above with respect to the grating-coupled light guide 100. For example, the plate light guide 310 may be a slab optical waveguide that is a planar sheet of dielectric material configured to guide light by total internal reflection.

The 3-D electronic display 300 further includes a grating coupler 320. The grating coupler 320 is configured to diffractively couple light from a light source into the plate light guide 310 as guided light. According to some examples, the grating coupler 320 may be substantially similar to the grating coupler 120 described above with respect to the grating-coupled light guide 100. In particular, the grating coupler 320 is configured to produce a beam of guided light within the plate light guide 310 having a predetermined spread angle. For example, the beam of guided light may have both a predetermined first spread angle and a predetermined second spread angle as described above with respect to the grating coupler 120.

The 3-D electronic display 300 illustrated in Figure 9 further includes an array of multibeam diffraction gratings 330. The array of multibeam diffraction gratings 330 are located at a surface of the plate light guide 310 to couple out a portion of the guided light as a plurality of light beams 304 and further to direct the light beams 304 in a plurality of different principal angular directions away from the plate light guide 310, according to various examples. In some examples, a multibeam diffraction grating 330 of the array may be substantially similar to the multibeam diffraction grating 250 of the grating-coupled light guide system 200 configured as a multibeam diffraction grating-based backlight, as described above.

In particular, in some examples, the multibeam diffraction grating 330 includes a chirped diffraction grating. In some examples, diffractive features (e.g., grooves, ridges, etc.) of the multibeam diffraction grating 330 are curved diffractive features. In yet other examples, the multibeam diffraction grating 330 of the array includes a chirped diffraction grating that also has the curved diffractive features. For example, the curved diffractive features may include a ridge or a groove that is curved (i.e., continuously curved or piece-wise curved) and a spacing between the curved diffractive features that may vary as a function of distance across the multibeam diffraction grating 330.

Further, as illustrated in Figure 9, the 3-D electronic display 300 includes a light valve array 340. The light valve array 340 includes a plurality of light valves configured to modulate the differently directed light beams 304 of the light beam plurality, according to various examples. In particular, the light valves of the light valve ones of the modulated, differently directed light beams 302 may correspond to different views of the 3-D electronic display 300. In various examples, different types of light valves in the light valve array 340 may be employed including, but not limited to, liquid crystal light valves and electrophoretic light valves. Dashed lines are used in Figure 9 to emphasize modulation of the light beams 302.

According to some examples of the principles described herein, a method of coupling light into a plate light guide is provided. Figure 10 illustrates a flow chart of a method 400 of coupling light into a plate light guide, according to an example consistent with the principles described herein. As illustrated in Figure 10, the method 400 of coupling light into a plate light guide includes generating 410 light using a light source. In some examples, the light source is an uncollimated light source and the generated 410 light is substantially uncollimated light. For example, the light source may approximate a point source. In some examples, the light source used to generate 410 light is substantially similar to the light source 106 described above with respect to the grating-coupled light guide 100.

Further, as illustrated in Figure 10, the method 400 of coupling light into a plate light guide includes coupling 420 the light from the light source into the plate light guide using a grating coupler; and guiding 430 the coupled light in the plate light guide at a non-zero propagation angle as guided light. According to various examples, the guided light includes a propagating light beam directed at the non-zero propagation angle by the grating coupler that has a predetermined first spread angle in a plane perpendicular to a surface of the plate light guide and a predetermined second spread angle in a plane substantially parallel to surface of the plate light guide. The predetermined first and second spread angles are determined by characteristics of the grating coupler, according to various examples.

In some examples, the grating coupler used in coupling 420 the light is substantially similar to the grating coupler 120 described above with respect to the grating-coupled light guide 100. In particular, in some examples, the grating coupler includes a transmissive grating at a surface of the plate light guide adjacent to the light source. In some examples, the grating coupler includes a reflective grating at a surface of the plate light guide opposite the light source-adjacent surface of the plate light guide.

In some examples, the plate light guide used in guiding 430 light at a non-zero angle is substantially similar to the plate light guide 110 of the grating-coupled light guide 100, described above. In particular, in some examples, the plate light guide guides 430 the guided light according to total internal reflection. Further, the plate light guide may be a substantially planar dielectric optical waveguide (e.g., a planar dielectric sheet), in some examples.

In some examples, the method 400 of coupling light into a light guide is used with a touch-sensitive panel (e.g., the panel illustrated in Figure 6). In particular, the plate light guide may be the touch-sensitive panel and the guided 430 light may be used to determine one or both of a location and a pressure of a touch of the touch-sensitive panel.

In some examples, the method 400 of coupling light into a light guide is used in the operation of an electronic display (e.g., the display illustrated in Figure 9). In particular, according to some examples (not illustrated), the method 400 of coupling light into a light guide further includes diffractively coupling out a portion of the guided light using a multibeam diffraction grating. According to various examples, the multibeam diffraction grating is located at a surface of the plate light guide. For example, the multibeam diffraction grating may be formed in the surface of the plate light guide as grooves, ridges, etc. In other examples, the multibeam diffraction grating may include a film on the plate light guide surface. In some examples, the multibeam diffraction grating is substantially similar to the multibeam diffraction grating 250 described above with respect to the grating-coupled light guide system 200.

In particular, the portion of guided light that is diffractively coupled out of the plate light guide by the multibeam diffraction grating produces a plurality of light beams. Light beams of the plurality are redirected away from the plate light guide surface. Moreover, a light beam of the light beam plurality that is redirected away from the surface has a different principal angular direction from other light beams of the plurality. In some examples, each redirected light beam of the plurality has a different principal angular direction relative to the other light beams of the plurality.

According to some examples (not illustrated), the method 400 of coupling light into a light guide further includes modulating the plurality of light beams using a corresponding plurality of light valves. Light beams of the light beam plurality may be modulated by passing through or otherwise interacting with the corresponding plurality of light valves, for example. The modulated light beams may form pixels of a three-dimensional (3-D) color electronic display. For example, the modulated light beams may provide a plurality of views of the 3-D color electronic display (e.g., a glasses-free, 3-D color electronic display). According to various examples, the light valves employed in modulating may be substantially similar to the light valves of the light valve array of the 3-D electronic display 300, described above. For example, the light valves may include liquid crystal light valves. In another example, the light valves may be another type of light valve including, but not limited to, an electrowetting light valve or an electrophoretic light valve.

Thus, there have been described examples of a grating-coupled light guide, a grating-coupled light guide system, a 3-D electronic display, and a method of coupling light into a light guide that employ a grating coupler to produce guided light propagating at a non-zero propagation angle and having a predetermined spread angle. It should be understood that the above-described examples are merely illustrative of some of the many specific examples that represent the principles described herein. Clearly, those skilled in the art can readily devise numerous other arrangements without departing from the scope as defined by the following claims.

**Claims**

1. A grating-based backlight (200, 300) comprising:

   a light guide comprising:
   a plate light guide (220, 310) to guide light at a non-zero propagation angle;
   **characterized in that** the light guide is a grating-coupled light guide and further comprises:

   a grating coupler (230, 320) at an input of the plate light guide, the grating coupler to receive light from a light source (210) and to diffractively redirect the light into the plate light guide at the non-zero propagation angle as guided light,
   wherein the grating coupler comprises diffractive features whose characteristics determine the non-zero propagation angle, a first spread angle, and a second spread angle of the guided light, the first spread angle being an angle in a plane perpendicular to a surface of the plate light guide and the second spread angle being an angle in a plane parallel to the surface of the plate light guide; and
   wherein the grating-based backlight is a multibeam grating-based backlight and further comprises:
   an array of a multibeam diffraction gratings (250,330) adjacent to the surface of the plate light guide, each of the multibeam diffraction gratings configured to couple out a portion of the guided light as a plurality of light beams (304), a principal angular direction of a light beam of the light beam plurality being different from principal angular directions of other light beams of the light beam plurality.

2. The multibeam grating-based backlight of Claim 1, wherein the grating coupler is a transmissive grating coupler comprising a transmission mode diffraction grating (122') at a surface (112) of the plate light guide adjacent to the light source, the transmission mode diffraction grating to diffractively redirect light transmitted through the diffraction grating.

3. The multibeam grating-based backlight of Claim 2, wherein the transmission mode diffraction grating comprises grooves in the surface (112) of the plate light guide adjacent to the light source, the grooves being filled with grating material (124).

4. The multibeam grating-based backlight of Claim 2, wherein grating material (124) is deposited on the surface of the plate light guide, the transmission mode diffraction grating comprising a plurality of ridges formed in the deposited grating material.

5. The multibeam grating-based backlight of Claim 1, wherein the grating coupler is a reflective grating coupler comprising a reflection mode diffraction grating (122") at a surface (114) of the plate light guide opposite a plate light guide surface adjacent to the light source, the reflection mode diffraction grating to diffractively redirect light into the plate light guide using reflective diffraction.

6. The multibeam grating-based backlight of Claim 5, wherein the reflective grating coupler further comprises a layer of reflective metal (126) to facilitate reflection by the reflection mode diffraction grating.

7. The multibeam grating-based backlight of Claim 1, further comprising the light source, wherein a cone angle of light provided by the light source is greater than about sixty, 60, degrees, wherein a central ray of the light provided by the light source is incident on the grating coupler at an angle that is substantially orthogonal to the surface of the plate light guide.

8. The multibeam grating-based backlight of Claim 1, further comprising the light source, wherein the light to be diffractively redirected into the plate light guide as the guided light is substantially collimated, the light source being an uncollimated light source.

9. The multibeam grating-based backlight of Claim 1, wherein the plate light guide is a touch-sensitive panel, wherein a touch of a surface of the plate light guide is sensed using frustrated total internal reflection of the guided light within the plate light guide.

10. The multibeam grating-based backlight of Claim 9, further comprising:
a plurality of light sensors (240) at an edge of the plate light guide to detect the guided light.

11. The multibeam grating-based backlight of Claim 1, wherein a multibeam diffraction grating of the array of multibeam diffraction gratings comprises a linear chirped diffraction grating.

12. The multibeam grating-based backlight of Claim 1, wherein a multibeam diffraction grating of the array of multibeam diffraction gratings comprises one of curved grooves in the plate light guide surface and curved ridges on the surface of the plate light guide that are spaced apart from one another.

13. A three-dimensional (3-D) electronic display comprising:

the multibeam grating-based backlight of Claim 1; and
a light valve array (340) to modulate the plurality of light beams, the modulated plurality of light beams representing pixels of the 3-D electronic display, optionally wherein the array of multibeam diffraction gratings comprises a chirped diffraction grating having curved diffractive features and wherein the light valve array comprises a plurality of liquid crystal light valves.

14. A method of coupling light into a plate light guide, the method comprising:

generating light using a light source (410);

coupling the light from the light source into the plate light guide using a grating coupler (420) comprising diffractive features;

guiding the coupled light in the plate light guide at a non-zero propagation angle as guided light (430), wherein the guided light includes a propagating light beam directed at the non-zero propagation angle by the grating coupler and having a predetermined first spread angle in a plane perpendicular to a surface of the plate light guide and a predetermined second spread angle in a plane substantially parallel to the surface of the plate light guide, the predetermined first and second spread angles being determined by characteristics of the diffractive features of the grating coupler; and

diffractively coupling out a portion of the guided light using a multibeam diffraction grating at the surface of the plate light guide to produce a plurality of light beams directed away from the plate light guide in a plurality of different principal angular directions.

**15.** A method of electronic display comprising the method of coupling light into a light guide of Claim 14, further comprising: modulating the plurality of light beams using a corresponding plurality of light valves, the modulated light beams forming pixels of a three-dimensional (3-D) electronic display.

**Patentansprüche**

**1.** Gitterbasierte Hintergrundbeleuchtung (200, 300), umfassend:

einen Lichtleiter umfassend:
einen Plattenlichtleiter (220, 310) zum Leiten von Licht in einem von null verschiedenen Ausbreitungswinkel;
**dadurch gekennzeichnet, dass** der Lichtleiter ein gittergekoppelter Lichtleiter ist und ferner umfasst:

einen Gitterkoppler (230, 320) an einem Eingang des Plattenlichtleiters, wobei der Gitterkoppler Licht von einer Lichtquelle (210) empfängt und das Licht in einem von null verschiedenen Ausbreitungswinkel beugend als geleitetes Licht in den Plattenlichtleiter umleitet,

wobei der Gitterkoppler Beugungsmerkmale umfasst, deren Charakteristiken den von null verschiedenen Ausbreitungswinkel, einen ersten Öffnungswinkel und einen zweiten Öffnungswinkel des geleiteten Lichts bestimmen, wobei der erste Öffnungswinkel ein Winkel in einer Ebene senkrecht zu einer Oberfläche des Plattenlichtleiters ist und der zweite Öffnungswinkel ein Winkel in einer Ebene parallel zur Oberfläche des Plattenlichtleiters ist; und

wobei die gitterbasierte Hintergrundbeleuchtung eine gitterbasierte Mehrstrahl-Hintergrundbeleuchtung ist und ferner umfasst:
eine Anordnung von Mehrstrahl-Beugungsgittern (250, 330) benachbart zur Oberfläche des Plattenlichtleiters, wobei jedes der Mehrstrahl-Beugungsgitter zum Auskoppeln eines Teils des geleiteten Lichts als eine Mehrzahl von Lichtstrahlen (304) ausgelegt ist, wobei eine Hauptwinkelrichtung eines Lichtstrahls der Lichtstrahlenmehrzahl sich von Hauptwinkelrichtungen anderer Lichtstrahlen der Lichtstrahlenmehrzahl unterscheidet.

**2.** Gitterbasierte Mehrstrahl-Hintergrundbeleuchtung nach Anspruch 1, wobei der Gitterkoppler ein transmissiver Gitterkoppler ist, der ein Transmissionsmodus-Beugungsgitter (122') an einer Oberfläche (112) des Plattenlichtleiters benachbart zur Lichtquelle umfasst, wobei das Transmissionsmodus-Beugungsgitter Licht, das durch das Beugungsgitter durchgelassen wird, beugend umleitet.

**3.** Gitterbasierte Mehrstrahl-Hintergrundbeleuchtung nach Anspruch 2, wobei das Transmissionsmodus-Beugungsgitter Rillen in der Oberfläche (112) des Plattenlichtleiters benachbart zur Lichtquelle umfasst, wobei die Rillen mit Gittermaterial (124) gefüllt sind.

**4.** Gitterbasierte Mehrstrahl-Hintergrundbeleuchtung nach Anspruch 2, wobei das Gittermaterial (124) auf die Oberfläche des Plattenlichtleiters abgeschieden ist, wobei das Transmissionsmodus-Beugungsgitter eine Mehrzahl von Rippen umfasst, die im abgeschiedenen Gittermaterial ausgebildet ist.

**5.** Gitterbasierte Mehrstrahl-Hintergrundbeleuchtung nach Anspruch 1, wobei der Gitterkoppler ein reflektiver Gitterkoppler ist, der ein Reflexionsmodus-Beugungsgitter (122') an einer Oberfläche (114) des Plattenlichtleiters gegenüber einer Plattenlichtleiteroberfläche benachbart zur Lichtquelle umfasst, wobei das Reflexionsmodus-Beugungsgitter Licht in den Plattenlichtleiter unter Verwendung von Reflexionsbeugung beugend umleitet.

6. Gitterbasierte Mehrstrahl-Hintergrundbeleuchtung nach Anspruch 5, wobei der reflektive Gitterkoppler ferner eine Schicht aus reflektierendem Metall (126) zum Ermöglichen von Reflexion durch das Reflexionsmodus-Beugungsgitter umfasst.

7. Gitterbasierter Mehrstrahl-Hintergrundbeleuchtung nach Anspruch 1, ferner umfassend die Lichtquelle, wobei ein Lichtkegelwinkel, der von der Lichtquelle bereitgestellt wird, größer als etwa sechzig, 60, Grad ist, wobei ein Mittelstrahl des von der Lichtquelle bereitgestellten Lichts in einem Winkel, der im Wesentlichen orthogonal zur Oberfläche des Plattenlichtleiters ist, auf dem Gitterkoppler auftrifft.

8. Gitterbasierte Mehrstrahl-Hintergrundbeleuchtung nach Anspruch 1, ferner umfassend die Lichtquelle, wobei das Licht, das als das geleitete Licht beugend in den Plattenlichtleiter umgeleitet werden soll, im Wesentlichen kollimiert ist, wobei die Lichtquelle eine unkollimierte Lichtquelle ist.

9. Gitterbasierte Mehrstrahl-Hintergrundbeleuchtung nach Anspruch 1, wobei der Plattenlichtleiter ein berührungsempfindliches Bedienfeld ist, wobei eine Berührung einer Oberfläche des Plattenlichtleiters unter Verwendung frustrierter interner Totalreflexion des geleiteten Lichts innerhalb des Plattenlichtleiters erfasst wird.

10. Gitterbasierte Mehrstrahl-Hintergrundbeleuchtung nach Anspruch 9, ferner umfassend:
eine Mehrzahl von Lichtsensoren (240) an einer Kante des Plattenlichtleiters zum Detektieren des geleiteten Lichts.

11. Gitterbasierte Mehrstrahl-Hintergrundbeleuchtung nach Anspruch 1, wobei ein Mehrstrahl-Beugungsgitter der Anordnung von Mehrstrahl-Beugungsgittern ein lineares gechirptes Beugungsgitter umfasst.

12. Gitterbasierte Mehrstrahl-Hintergrundbeleuchtung nach Anspruch 1, wobei ein Mehrstrahl-Beugungsgitter der Anordnung von Mehrstrahl-Beugungsgittern eines von gekrümmten Rillen in der Plattenlichtleiteroberfläche und gekrümmten Rippen auf der Oberfläche des Plattenlichtleiters umfasst, die voneinander beabstandet sind.

13. Dreidimensionale (3D) elektronische Anzeige, umfassend:

die gitterbasierte Mehrstrahl-Hintergrundbeleuchtung nach Anspruch 1; und
eine Lichtventilanordnung (340) zum Modulieren der Mehrzahl von Lichtstrahlen, wobei die modulierte Mehrzahl von Lichtstrahlen Pixel der elektronischen 3D-Anzeige darstellt, wobei die Anordnung von Mehrstrahl-Beugungsgittern optional ein gechirptes Beugungsgitter mit gekrümmten Beugungsmerkmalen umfasst, und wobei die Lichtventilanordnung eine Mehrzahl von Flüssigkristall-Lichtventilen umfasst.

14. Verfahren zum Einkoppeln von Licht in einen Plattenlichtleiter, umfassend:

Erzeugen von Licht unter Verwendung einer Lichtquelle (410);
Einkoppeln des Lichts von der Lichtquelle in den Plattenlichtleiter unter Verwendung eines Gitterkopplers mit Beugungsmerkmalen (420);
Leiten des eingekoppelten Lichts im Plattenlichtleiter in einem von null verschiedenen Ausbreitungswinkel als geleitetes Licht (430);
wobei das geleitete Licht einen Ausbreitungslichtstrahl umfasst, der vom Gitterkoppler in dem von null verschiedenen Ausbreitungswinkel ausgerichtet wird und einen vorbestimmten ersten Öffnungswinkel in einer Ebene senkrecht zu einer Oberfläche des Plattenlichtleiters und einen vorbestimmten zweiten Öffnungswinkel im Wesentlichen parallel zur Oberfläche des Plattenlichtleiters aufweist, wobei der vorbestimmte erste und der vorbestimmte zweite Öffnungswinkel durch Charakteristiken der Beugungsmerkmale des Gitterkopplers bestimmt werden; und
beugendes Auskoppeln eines Teils des geleiteten Lichts unter Verwendung eines Mehrstrahl-Beugungsgitters an der Oberfläche des Plattenlichtleiters, um eine Mehrzahl von Lichtstrahlen zu erzeugen, die in einer Mehrzahl von verschiedenen Hauptwinkelrichtungen vom Plattenlichtleiter weg gerichtet wird.

15. Verfahren für eine elektronische Anzeige, umfassend das Verfahren zum Einkoppeln von Licht in einen Lichtleiter nach Anspruch 14, ferner umfassend:
Modulieren der Mehrzahl von Lichtstrahlen unter Verwendung einer entsprechenden Mehrzahl von Lichtventilen, wobei die modulierten Lichtstrahlen Pixel einer dreidimensionalen (3D) elektronischen Anzeige bilden.

**Revendications**

1. Rétroéclairage à base de réseaux (200, 300) comprenant :

   un guide de lumière comprenant :

   un guide de lumière à plaque (220, 310) pour guider la lumière à un angle de propagation non nul ; **caractérisé en ce que** le guide de lumière est un guide de lumière couplé à un réseau et comprend en outre : un coupleur de réseau (230, 320) à une entrée du guide de lumière à plaque, le coupleur de réseau recevant la lumière d'une source de lumière (210) et redirigeant par diffraction la lumière dans le guide de lumière à plaque à l'angle de propagation non nul en tant que lumière guidée, le coupleur de réseau comprenant des éléments diffractifs dont les caractéristiques déterminent l'angle de propagation non nul, un premier angle d'étalement et un second angle d'étalement de la lumière guidée, le premier angle d'étalement étant un angle dans un plan perpendiculaire à une surface du guide de lumière à plaque et le second angle d'étalement étant un angle dans un plan parallèle à la surface du guide de lumière à plaque ; et

   le rétroéclairage à base de réseaux étant un rétroéclairage à base de réseaux multifaisceaux et comprenant en outre : un ensemble de réseaux de diffraction multifaisceaux (250, 330) adjacent à la surface du guide de lumière à plaque, chacun des réseaux de diffraction multifaisceaux étant configuré pour coupler une partie de la lumière guidée sous la forme d'une pluralité de faisceaux lumineux (304), une direction angulaire principale d'un faisceau lumineux de la pluralité de faisceaux lumineux étant différente des directions angulaires principales d'autres faisceaux lumineux de la pluralité de faisceaux lumineux.

2. Rétroéclairage à base de réseaux multifaisceaux selon la revendication 1, le coupleur de réseaux étant un coupleur de réseaux transmissif comprenant un réseau de diffraction en mode transmission (122') sur une surface (112) du guide de lumière à plaque adjacent à la source de lumière, le réseau de diffraction en mode transmission étant destiné à rediriger par diffraction la lumière transmise à travers le réseau de diffraction.

3. Rétroéclairage à base de réseaux multifaisceaux selon la revendication 2, le réseau de diffraction en mode transmission comprenant des rainures dans la surface (112) du guide de lumière à plaque adjacent à la source de lumière, les rainures étant remplies de matériau de réseau (124).

4. Rétroéclairage à base de réseaux multifaisceaux selon la revendication 2, le matériau de réseau (124) étant déposé sur la surface du guide de lumière à plaque, le réseau de diffraction en mode transmission comprenant une pluralité de crêtes formées dans le matériau de réseau déposé.

5. Rétroéclairage à base de réseaux multifaisceaux selon la revendication 1, le coupleur de réseau étant un coupleur de réseau réfléchissant comprenant un réseau de diffraction en mode réflexion (122") sur une surface (114) du guide de lumière à plaque opposée à une surface de guide de lumière à plaque adjacente à la source de lumière, le réseau de diffraction en mode réflexion étant destiné à rediriger par diffraction la lumière dans le guide de lumière à plaque à l'aide de la diffraction réfléchissante.

6. Rétroéclairage à base de réseaux multifaisceaux selon la revendication 5, le coupleur de réseaux réfléchissants comprenant en outre une couche de métal réfléchissant (126) pour faciliter la réflexion par le réseau de diffraction en mode réflexion.

7. Rétroéclairage à base de réseaux multifaisceaux selon la revendication 1, comprenant en outre la source de lumière, un angle de cône de lumière fourni par la source de lumière étant supérieur à environ soixante, 60, degrés, un rayon central de la lumière fournie par la source de lumière étant incident sur le coupleur de réseau à un angle qui est sensiblement orthogonal à la surface du guide de lumière à plaque.

8. Rétroéclairage à base de réseaux multifaisceaux selon la revendication 1, comprenant en outre la source de lumière, la lumière à rediriger par diffraction dans le guide de lumière à plaque en tant que lumière guidée étant sensiblement collimatée, la source de lumière étant une source de lumière non collimatée.

9. Rétroéclairage à base de réseaux multifaisceaux selon la revendication 1, le guide de lumière à plaque étant un panneau tactile, un toucher d'une surface du guide de lumière à plaque étant détecté en utilisant la réflexion interne totale frustrée de la lumière guidée à l'intérieur du guide de lumière à plaque.

**10.** Rétroéclairage à base de réseaux multifaisceaux selon la revendication 9, comprenant en outre :
une pluralité de capteurs de lumière (240) sur un bord du guide de lumière à plaque pour détecter la lumière guidée.

**11.** Rétroéclairage à base de réseaux multifaisceaux selon la revendication 1, un réseau de diffraction multifaisceaux de l'ensemble de réseaux de diffraction multifaisceaux comprenant un réseau de diffraction linéaire chirpé.

**12.** Rétroéclairage à base de réseaux multifaisceaux selon la revendication 1, un réseau de diffraction multifaisceaux de l'ensemble de réseaux de diffraction multifaisceaux comprenant l'une des rainures incurvées de la surface du guide de lumière à plaque et des crêtes incurvées sur la surface du guide de lumière à plaque qui sont espacées les unes des autres.

**13.** Affichage électronique tridimensionnel (3-D) comprenant :

le rétroéclairage à base de réseaux multifaisceaux selon la revendication 1 ; et
un ensemble de modulateurs de lumière (340) pour moduler la pluralité de faisceaux lumineux, la pluralité de faisceaux lumineux modulés représentant des pixels de l'affichage électronique tridimensionnel, éventuellement l'ensemble de réseaux de diffraction multifaisceaux comprenant un réseau de diffraction chirpé ayant des éléments diffractifs incurvés et l'ensemble de modulateurs de lumière comprenant une pluralité de modulateurs de lumière à cristaux liquides.

**14.** Procédé de couplage de la lumière dans un guide de lumière à plaque, le procédé comprenant :

la génération de lumière à l'aide d'une source de lumière (410),
le couplage de la lumière de la source lumineuse dans le guide de lumière à plaque à l'aide d'un coupleur de réseau (420) comprenant des éléments diffractifs ;
le guidage de la lumière couplée dans le guide de lumière à plaque à un angle de propagation non nul en tant que lumière guidée (430),
la lumière guidée comprenant un faisceau de lumière se propageant dirigé à l'angle de propagation non nul par le coupleur de réseau et ayant un premier angle d'étalement prédéterminé dans un plan perpendiculaire à une surface du guide de lumière à plaque et un second angle d'étalement prédéterminé dans un plan sensiblement parallèle à la surface du guide de lumière à plaque, les premier et second angles d'étalement prédéterminés étant déterminés par les caractéristiques des éléments diffractifs du coupleur de réseau ; et
le couplage diffractif d'une partie de la lumière guidée à l'aide d'un réseau de diffraction multifaisceaux à la surface du guide de lumière à plaque pour produire une pluralité de faisceaux de lumière dirigés loin du guide de lumière à plaque dans une pluralité de directions angulaires principales différentes.

**15.** Procédé d'affichage électronique comprenant le procédé de couplage de la lumière dans un guide de lumière selon la revendication 14, comprenant en outre :
la modulation de la pluralité de faisceaux lumineux à l'aide d'une pluralité correspondante de modulateurs de lumière, les faisceaux lumineux modulés formant des pixels d'un affichage électronique tridimensionnel (3-D).

**FIG. 1A**

**FIG. 1B**

**FIG. 2A**

**FIG. 2B**

100

110

120

122'    124    112

FIG. 3A

100

110

120

122'    124    112

FIG. 3B

*100*

*114*  *122″*  *124, 126*

*120*

*112*  *110*

*FIG. 4A*

*100*

*126*  *122″*  *124*

*114*

*120*

*112*  *110*

*FIG. 4B*

200

230

**Grating Coupler**

220

**Plate Light Guide**

**Light Source** 210

**FIG. 5**

240

200

220

230

222

224

210

z

y x

**FIG. 6**

*FIG. 7*

*FIG. 8*

*300*  *302*

Light Valve Array — *340*

*304*

Multibeam Diffraction Gratings — *330*

*320* — Grating Coupler

Plate Light Guide — *310*

# FIG. 9

*400*

*410* — Generate Light using Light Source

*420* — Couple In Light using Grating Coupler

*430* — Guide Light at Non-Zero Angle

# FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020076129 A1

- US 3885856 A

**Non-patent literature cited in the description**

- **DAVID FATTAL et al.** A multi-directional backlight for a wide-angle, glasses-free three-dimensional display. *Nature,* 20 March 2013, vol. 495 (7441), 348-351